# EUROPEAN PATENT APPLICATION

(11) **EP 1 467 286 A2**
(43) Date of publication of application: **13.10.2004**
(21) Application number: 04004863.9
(22) Date of filing: 02.03.2004
(51) Int. Cl.: G06F 13/40

(54) **Information apparatus having a bridge circuit between computer buses and transaction control method**

(30) Priority: 31.03.2003 JP 2003095673
(71) Applicant: Kabushiki Kaisha Toshiba, Tokyo (JP)
(72) Inventor: Aoyama, Yoshimasa, Minato-ku Tokyo 105-8001 (JP)
(74) Representative: Henkel, Feiler & Hänzel

(57) **Abstract**

An information apparatus includes a first bus (5) which transfers a non-encrypted transaction containing an address, a second bus (9) connected to an outside of the information apparatus, and a bridge circuit (10) connected between the first and second buses (5, 9), the bridge circuit (10) including a first controller (40) which determines whether an address contained in the non-encrypted transaction transferred through the first bus (5) falls within a first particular address range, and which prevents the non-encrypted transaction from being transmitted to the second bus (9), if the address falls within the first particular address range.

## Description

The present invention relates to an information apparatus with a general-purpose bus for transferring a transaction, and a transaction control method.

Information apparatuses, such as personal computers, contain a general-purpose bus, such as a peripheral component interconnect (PCI) bus. Various devices, such as a storage device and display device, are connected to the general-purpose bus, and content data (hereinafter referred to simply as "data") is transmitted between the devices.

Data transferred via a general-purpose bus includes data to be protected in view of copyright. During transfer of data on a general-purpose bus, there is a danger of illegal acquisition of data to be protected at an access point (e.g., a PCI slot) from outside the bus. To avoid this, data is generally encrypted before it is transferred from a device to a general-purpose bus. The encrypted data is decrypted after it is transferred through the bus and before it is input to a destination device.

However, providing all devices connected to a general-purpose bus with hardware or software for encryption or decryption inevitably increases the cost. Further, realization of reliable encryption or decryption requires considerable development cost and time. In light of this, there is a demand for a technique for realizing safe transfer of data to a general-purpose bus without encrypting the data, and preventing data from reaching the outside through the above-mentioned access point.

U.S. Patent No. 6,311,255 discloses a technique for preventing the protected area of a memory in a device from being illegally accessed through an adaptor on a PCI bus. In this technique, whether a request for access to a target should be allowed is determined by checking the ID of the requester and the address of the target.

This technique may protect the target from illegal access through a general-purpose bus, such as a PCI bus; however, once data to be protected, which is not encrypted, reaches the above-mentioned access point, it may easily reach the outside even if there is no illegal access.

Embodiments of the present invention may provide an information apparatus capable of safely transferring data to be protected even if the data is not encrypted when transmitting it to a general-purpose bus, and an information processing method for achieving such safe transfer.

According to one aspect of the present invention, there is provided an information apparatus, comprising a first bus which transfers a non-encrypted transaction containing an address; a second bus connected to an outside of the information apparatus; and a bridge circuit connected between the first and second buses, the bridge circuit including a first controller which determines whether an address contained in the non-encrypted transaction transferred through the first bus falls within a first particular address range, and which prevents the non-encrypted transaction from being transmitted to the second bus, if the address falls within the first particular address range.

According to another aspect of the present invention, there is provided a transaction control method applied to an information apparatus, comprising receiving a non-encrypted transaction transferred through a first bus, the non-encrypted transaction containing an address; extracting the address from the received transaction; and determining whether the extracted address falls within a particular address range, and preventing the transaction from being transmitted to a second bus connected to an outside of the information apparatus, if the extracted address falls within the particular address range.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram illustrating the configuration of an information apparatus according to an embodiment of the invention;
FIG. 2 is a block diagram illustrating a configuration example of a bridge circuit;
FIG. 3 shows an information apparatus according to a modification of the embodiment of FIG. 1;
FIG. 4 shows a modification of the bridge circuit of FIG. 2;
FIG. 5 is a flowchart useful in explaining an operation example of the entire information apparatus related to transfer processing; and
FIG. 6 is a flowchart illustrating an operation example of the bride circuit.

Embodiments of the present invention will be described below with reference to the drawings.

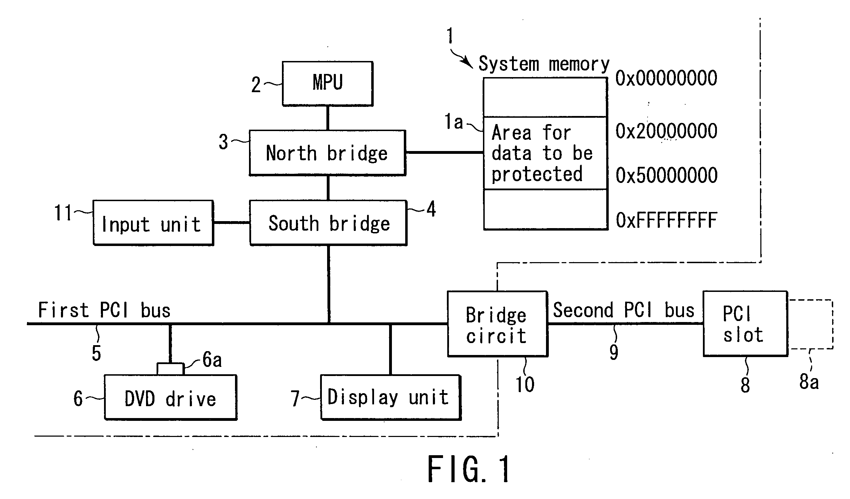

FIG. 1 is a block diagram illustrating the configuration of an information apparatus according to an embodiment of the invention.

The information apparatus shown in FIG. 1 is, for example, a personal computer (PC), which includes a system memory 1, microprocessor unit (MPU) 2, north bridge 3, south bridge 4, first PCI bus 5, digital general-purpose disk (DVD) drive 6, display unit 7, PCI slot 8, second PCI bus 9, bridge circuit 10, input unit 11, etc.

The system memory 1 holds various types of data processed by the MPU 2, and is used as a work area for the MPU 2. In the example of FIG. 1, the address space (0x20000000 to 0x50000000) as a part of the address space (0x00000000 to 0xFFFFFFFF) of the system memory 1, which contains a series of address numbers, is assigned in advance to an area la used for processing data to be protected.

The MPU 2 controls the entire information apparatus. When a request to process data (for example, a request to reproduce video data) is input through, for example, the input unit 11, the MPU 2 reads the data from a device connected to the first PCI bus 5 and develops it on the system memory 1. Further, the MPU 2 transmits, to the first PCI bus 5, a transaction that includes the data developed on the system memory 1, the corresponding address, the type of request, etc., in order to send it to a destination device in which the data is reproduced.

The north bridge 3 has various controllers for performing bridge processing between the MPU 2 and south bridge 4, control of the system memory 1, etc.

The south bridge 4 is connected to the north bridge 3 and first PCI bus 5, and has a controller for processing signals input through the input unit 11, and a controller for controlling various PCI devices connected to the first PCI bus 5.

The first PCI bus 5 is a general-purpose bus, and is used to transfer a transaction that is not encrypted. The first PCI bus 5 is connected to the south bridge 4 and bridge circuit 10.

The DVD drive 6 is a PCI device connected to the first PCI bus 5. Each DVD in the DVD drive 6 stores encrypted video data. When video data is read from each DVD, a decryption section 6a decrypts the data and transmits it to the PCI bus 5. In the embodiment, assume that the MPU 2 uses the area 1a of the system memory 1 to process the data read from a DVD in the DVD drive 6.

The display unit 7 is another PCI device connected to the first PCI bus 5. The display unit 7 receives a transaction transmitted through the first PCI bus 5, and displays data contained therein.

The PCI slot 8 has a detachable external device (such as a communication controller) 8a, and is connected to the second PCI bus 9. The PCI slot 8 is an access point at which a transaction on the second PCI bus 9 can be accessed by the external device.

The second PCI bus 9 is another general-purpose bus having the same structure as the first PCI bus 5, and is interposed between the bridge circuit 10 and PCI slot 8.

The bridge circuit 10 is connected between the first and second PCI buses 5 and 9. The bridge circuit 10 determines whether, for example, the address contained in the transaction transferred through the first PCI bus 5 falls within a particular address range (which is identical to, for example, an address space of 0x20000000 to 0x50000000 in the system memory 1). If the circuit 10 determines that the address falls within the range, it does not transmit the transaction to the second PCI bus 9. If, on the other hand, the address does not fall within the range, the transaction is transmitted to the second PCI bus 9.

Further, the bridge circuit 10 determines whether the address contained in the transaction transferred through the second PCI bus 9 falls within a predetermined address range (which is identical to, for example, the address space of Ox20000000 to 0x50000000 in the system memory 1). If the circuit 10 determines that the address falls within the range, it does not transmit the transaction to the first PCI bus 5. If, on the other hand, the address does not fall within the range, the transaction is transmitted to the first PCI bus 5.

The input unit 11, which includes a mouse and keyboard, is used by users to make various requests for data processing.

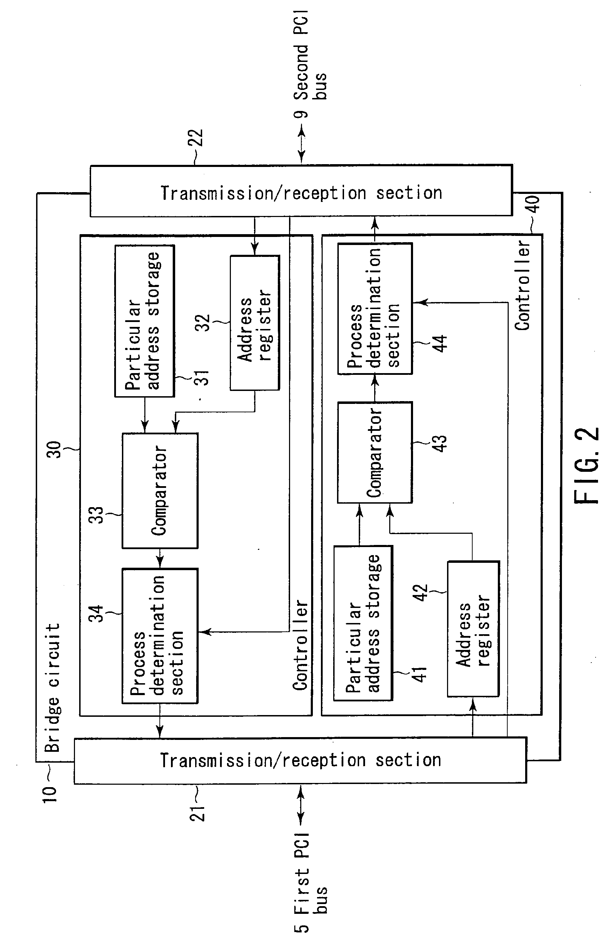

FIG. 2 is a block diagram illustrating a configuration example of the bridge circuit 10.

The bridge circuit 10 includes transmission/reception sections 21 and 22 and controllers 30 and 40.

The controller 30 includes a particular address storage 31, address register 32, comparator 33, and process determination section 34. Similarly, the controller 40 includes a particular address storage 41, address register 42, comparator 43, and process determination section 44.

Upon receiving a transaction transferred through the first PCI bus 5, the transmission/reception section 21 transmits the transaction to the process determination section 44 of the controller 40. Further, the section 21 extracts an address from the transaction and transmits the address to the address register 42 of the controller 40.

The particular address storage 41 prestores a particular address range (which is identical to, for example, the address space of 0x20000000 to 0x50000000 in the system memory 1). The comparator 43 compares the address stored in the particular address storage 41 with that stored in the address register 42, and outputs the comparison result indicating whether they are identical. From the comparison result, the process determination section 44 determines whether the address in the address register 42 falls within the particular address range. If the address does not fall within the range, the process determination section 44 determines that the transaction should be transmitted to the second PCI bus 9, and transfers the transaction to the transmission/reception section 22. On the other hand, the address falls within the particular address range, the transaction is revoked.

Upon receiving a transaction transferred through the second PCI bus 9, the transmission/reception section 22 transmits the transaction to the process determination section 34 of the controller 30. Further, the section 22 extracts an address from the transaction and transmits the address to the address register 32 of the controller 30.

The particular address storage 31 prestores a particular address range (which is identical to, for example, the address space of 0x20000000 to 0x50000000 in the system memory 1). The comparator 33 compares the address stored in the particular address storage 31 with that stored in the address register 32, and outputs the comparison result indicating whether they are identical. From the comparison result, the process determination section 34 determines whether the address in the address register 32 falls within the particular address range. If the address does not fall within the range, the process determination section 34 determines that the transaction should be transmitted to the first PCI bus 5, and transfers the transaction to the transmission/reception section 21. On the other hand, the address falls within the particular address range, the transaction is revoked.

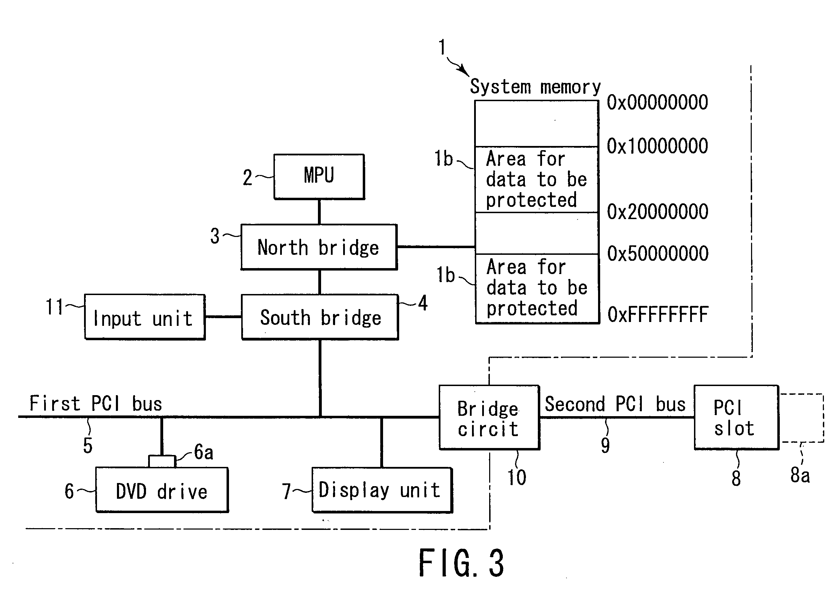

FIG. 3 shows a modification of the information apparatus of FIG. 1. In FIGS. 1 and 3, like reference numerals denote like elements.

Although in the example of FIG. 1, there is one area used to process data to be protected, the invention is not limited to this. Instead, two areas 1b and 1c, for example, may be employed to process data to be protected, as shown in FIG. 3.

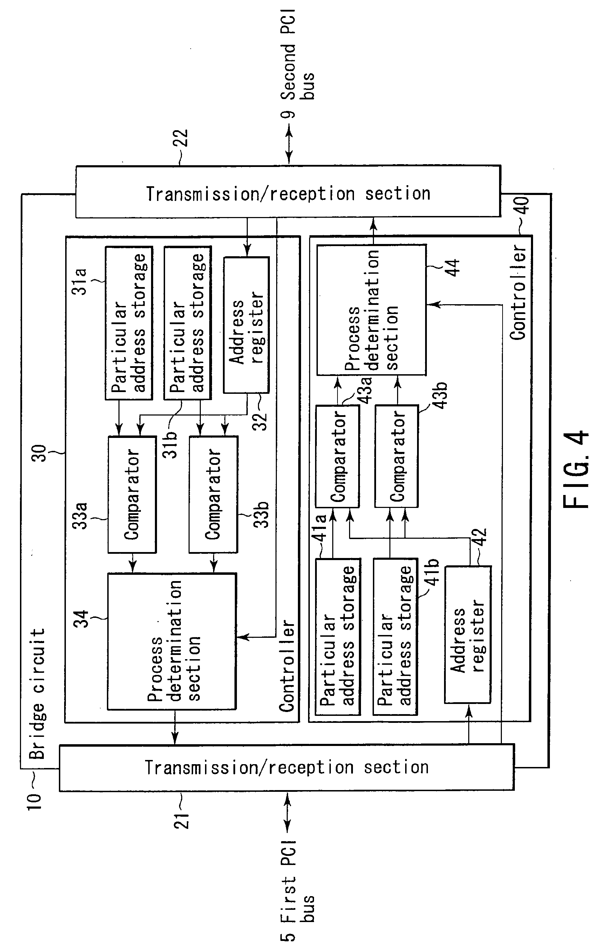

When the configuration of FIG. 3 is employed, it is sufficient if the configuration of the bridge circuit 10 shown in FIG. 2 is modified into the configuration shown in FIG. 4. The configuration of FIG. 4 will now be described.

A particular address storage 41a prestores a particular address range (which is identical to, for example, an address space of 0x10000000 to 0x20000000 in the system memory 1). Similarly, a particular address storage 41b prestores a particular address range (which is identical to, for example, an address space of 0x50000000 to 0xFFFFFFFF in the system memory 1).

A comparator 43a compares the address stored in the particular address storage 41a with that stored in the address register 42, and outputs the comparison result indicating whether they are identical. Similarly, a comparator 43b compares the address stored in the particular address storage 41b with that stored in the address register 42, and outputs the comparison result indicating whether they are identical.

From the comparison results, the process determination section 44 determines whether the address in the address register 42 falls within the particular address ranges. If the address does not fall within the ranges, the process determination section 44 determines that the transaction should be transmitted to the second PCI bus 9, and transfers the transaction to the transmission/reception section 22. On the other hand, if the address falls within the particular address ranges, the transaction is revoked.

Since elements 31 to 34 in the controller 30 have the same functions as the above-described elements 41 to 44, no description is given thereof.

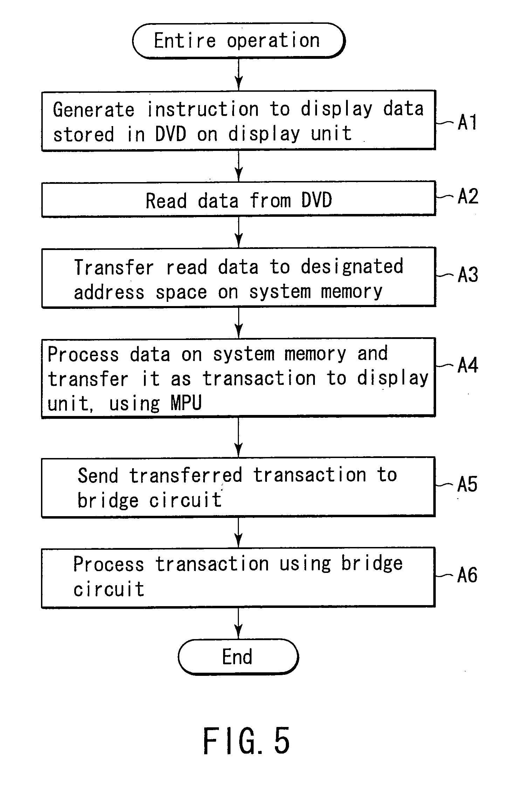

Referring to the flowchart of FIG. 5, a description will be given of the operation of the information apparatus constructed as shown in FIG. 1 that is related to transfer processing.

Upon receiving a request to reproduce a DVD, the south bridge 4 instructs the MPU 2 to display, on the display unit 7, data stored in the DVD in the DVD drive 6 (step A1).

The MPU 2 reads data from the DVD in the DVD drive 6 (step A2). The read data is not encrypted when it is transferred through the first PCI bus 5. The MPU 2 transfers the read data to a predetermined address space (e.g., the address space of 0x20000000 to 0x50000000) (step A3).

After that, the MPU 2 performs necessary processing on the data on the system memory 1, and then transfers it as a transaction to the display unit 7 (step A4). The transaction is not encrypted when it is transferred through the first PCI bus 5. The transaction is simultaneously transferred to the display unit 7 and bridge circuit 10 via the first PCI bus 5 (step A5).

Upon detecting the transaction transferred through the first PCI bus 5, the bridge circuit 10 processes it (step A6). Specifically, the bridge circuit 10 passes the transaction therethrough to the second PCI bus 9, or revokes it.

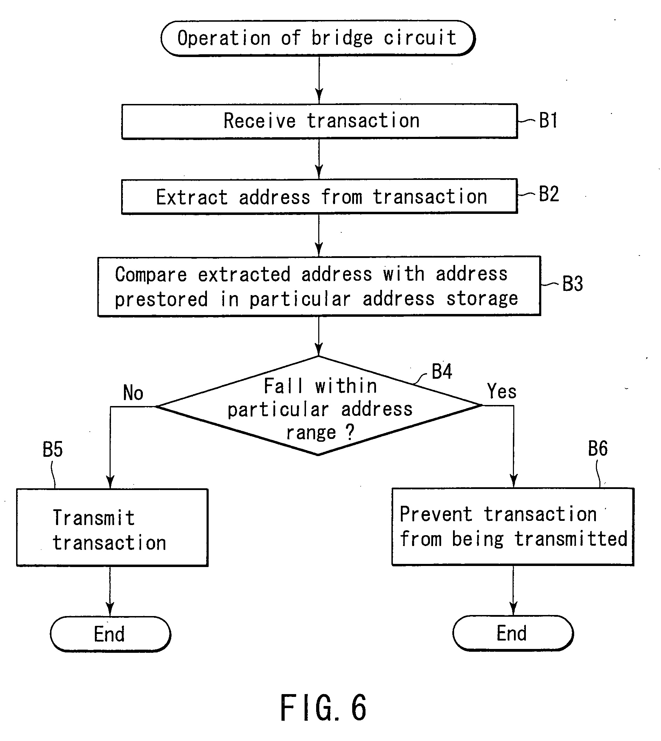

Referring to the flowchart of FIG. 6, the operation of the bridge circuit 10 constructed as shown in FIG. 2 will be described.

When, for example, a transaction is transferred to the bridge circuit 10 via the first PCI bus 5, the transmission/reception section 21 of the bridge circuit 10 receives the transaction (step B1). The transmission/reception section 21 detects an address from the received transaction (step B2). The detected address is sent to the address register 42 of the controller 40, while the transaction is sent to the process determination section 44.

The comparator 43 of the controller 40 compares the address extracted from the address register with the particular address range prestored in the particular address storage 41 (step B3). The comparison result is sent to the process determination section 44.

The process determination section 44 determines whether the address falls within the particular address range (step B4). If it does not fall within the range (NO at the step B4), the section 44 transmits the transaction to the second PCI bus 9 (step B5). If, on the other hand, it falls within the range (YES at the step B4), the section 44 prevents the transaction from being transmitted to the second PCI bus 9 by revoking the transaction (step B6).

The above-described description mainly concerns the operation of the controller 40. The controller 40 controls transactions transferred through the first PCI bus 5, while the controller 30 controls transactions transferred through the second PCI bus 9. Since the controller 30 operates in the same manner as the controller 40, no description is given of the operation of the controller 30.

As described above, even if data (or transaction), which is to be protected and is not encrypted, is transmitted to the first PCI bus, it can be protected, by the control of the bridge circuit 10, from reaching the outside through the second PCI bus. Further, even if a transaction related to data which is to be protected and is not encrypted is transmitted from outside through the second PCI bus, data to be protected can be prevented from being altered.

Thus, the present invention can protect data to be protected from reaching the outside, and transfer the data safely, even if the data is not encrypted before it is transmitted to a general-purpose bus.

## Claims

1. An information apparatus, **characterized by** comprising:
a first bus (5) which transfers a non-encrypted transaction containing an address;
a second bus (9) connected to an outside of the information apparatus; and
a bridge circuit (10) connected between the first and second buses (5, 9), the bridge circuit (10) including a first controller (40) which determines whether an address contained in the non-encrypted transaction transferred through the first bus (5) falls within a first particular address range, and which prevents the non-encrypted transaction from being transmitted to the second bus (9), if the address falls within the first particular address range.

2. The information apparatus according to claim 1, **characterized in that** the bridge circuit (10) further includes a second controller (30) which determines whether an address contained in a transaction transferred through the second bus (9) falls within a second particular address range, and which prevents the transaction from being transmitted to the first bus (5), if the address falls within the second particular address range.

3. The information apparatus according to claim 1, **characterized in that** the first controller (40) of the bridge circuit (10) includes:
a first storage (42) which stores the address contained in the transaction transferred through the first bus (5);
a second storage (41) which stores the first particular address range;
a comparator (43) which compares the address stored in the first storage (42) with the first particular address range stored in the second storage (41); and
a process determination section (44) which determines, from a comparison result of the comparator (43), whether the transaction transferred through the first bus (5) should be transmitted to the second bus (9).

4. The information apparatus according to claim 3, **characterized in that** the first particular address range stored in the second storage corresponds to a particular address space on a predetermined memory.

5. The information apparatus according to claim 1, **characterized by** further comprising a slot (8) to which an external device is attachable, the slot (8) being connected to the second bus (9).

6. The information apparatus according to claim 1, **characterized in that** the first bus (5) is a first peripheral component interconnect (PCI) bus and the second bus (9) is a second PCI bus.

7. The information apparatus according to claim 6, **characterized by** further comprising a PCI slot (8) to which a PCI device is attachable, the PCI slot (8) being connected to the second PCI bus (9).

8. A transaction control method applied to an information apparatus, **characterized by** comprising:
receiving a non-encrypted transaction transferred through a first bus, the non-encrypted transaction containing an address (B1);
extracting the address from the received transaction (B2); and
determining whether the extracted address falls within a particular address range, and preventing the transaction from being transmitted to a second bus connected to an outside of the information apparatus, if the extracted address falls within the particular address range (B3 to B6).

9. The method according to claim 8, **characterized by** further comprising:
receiving a transaction transferred through the second bus, the transaction containing an address (B1);
extracting the address from the received transaction (B2); and
determining whether the extracted address falls within a particular address range, and preventing the transaction from being transmitted to the first bus if the extracted address falls within the particular address range (B3 to B6) .
